# EUROPEAN PATENT APPLICATION

(11) **EP 4 124 892 A1**
(43) Date of publication of application: **01.02.2023**
(21) Application number: 21188799.7
(22) Date of filing: 30.07.2021
(51) Int. Cl.: G02B 1/02, G02B 21/00, G02B 21/02, G01B 9/04, G01B 11/24, G01B 11/30

(54) **CONFOCAL MICROSCOPY APPARATUS AND METHOD FOR IMAGING A SAMPLE BY CHROMATIC CONFOCAL MICROSCOPY**

(71) Applicant: Max-Planck-Gesellschaft zur Förderung der Wissenschaften e.V., 80539 München (DE)
(72) Inventor: Singh, Kanwarpal, 91058 Erlangen (DE); Sharma, Gargi, 91058 Erlangen (DE)
(74) Representative: v. Bezold & Partner Patentanwälte - PartG mbB

(57) **Abstract**

A confocal microscopy apparatus 100 for imaging a sample 2 under investigation by chromatic confocal microscopy comprises an illumination source device 10 being arranged for creating illumination light 1 having an illumination spectrum covering a plurality of illumination wavelengths, a focusing device 40 including at least one focusing lens 41 being configured for focusing the illumination light 1 along an imaging axis z into a plurality of wavelength-dependent focal planes in an axial imaging range of a sample 2 to be investigated, wherein the at least one focusing lens 41 is further arranged for collecting scattering light 3 created in the focal planes of the sample 2, and a detector device 50 being arranged for spectrally resolved detecting of the scattering light 3, wherein the at least one focusing lens 41 is made of a dispersive focusing lens 41 material with an Abbe number below 10, like e. g. ZnSe. Furthermore, a confocal microscopy method for imaging a sample 2 to be investigated by chromatic confocal microscopy is described.

## Description

### Field of the invention

The invention relates to a confocal microscopy apparatus and to a confocal microscopy method for imaging a sample under investigation by chromatic confocal microscopy. Applications of the invention are available in confocal microscopy, in particular in imaging of biological, medical samples or industrial samples.

### Prior art

In the present specification, reference is made to the following prior art illustrating the technical background of the invention:
[1] Paddock, S. W. Confocal Laser Scanning Microscopy. BioTechniques 27, 992-1004, doi:10.2144/99275ov01 (1999);
[2] Shi, K., Li, P., Yin, S. & Liu, Z. Chromatic confocal microscopy using supercontinuum light. Optics express 12, 2096-2101, doi:10.1364/OPEX.12.002096 (2004);
[3] Conchello, J.-A. & Lichtman, J. W. Optical sectioning microscopy. Nature Methods 2, 920-931, doi:10.1038/nmeth815 (2005);
[4] Oliveira-Soto, L. & Efron, N. Morphology of Corneal Nerves Using Confocal Microscopy. Cornea 20 (2001) 374;
[5] Claxton, N.S., Fellers, T.J. and Davidson, M.W. (2006). Confocal Microscopy. In: Encyclopedia of Medical Devices and Instrumentation, J.G. Webster (Ed.). https://doi.org/10.1002/0471732877.emd291 (2006);
[6] Paddock, S. W. Principles and practices of laser scanning confocal microscopy. Molecular Biotechnology 16, 127-149, doi:10.1385/MB:16:2:127 (2000);
[7] Wang, E., Babbey, C. M. & Dunn, K. W. Performance comparison between the high-speed Yokogawa spinning disc confocal system and single-point scanning confocal systems. Journal of Microscopy 218, 148-159, doi:https://doi.org/10.1111/j,1365-2818.2005.01473.x (2005);
[8] Tiziani, H. J. & Uhde, H. M. Three-dimensional image sensing by chromatic confocal microscopy. Appl. Opt. 33, 1838-1843, doi:10.1364/A0.33.001838 (1994);
[9] Tiziani, H. J., Achi, R. & Krämer, R. N. Chromatic confocal microscopy with microlenses. Journal of Modern Optics 43, 155-163, doi:10.1080/09500349608232730 (1996);
[10] Cha, S., Lin, P. C., Zhu, L., Sun, P.-C. & Fainman, Y. Nontranslational three-dimensional profilometry by chromatic confocal microscopy with dynamically configurable micromirror scanning. Appl. Opt. 39, 2605-2613, doi:10.1364/AO.39.002605 (2000);
[11] Olsovsky, C., Shelton, R., Carrasco-Zevallos, O., Applegate, B. E. & Maitland, K. C. Chromatic confocal microscopy for multi-depth imaging of epithelial tissue. Biomed Opt Express 4, 732-740, doi:10.1364/BOE.4.000732 (2013);
[12] Li, S. & Liang, R. DMD-based three-dimensional chromatic confocal microscopy. Appl. Opt. 59, 4349-4356, doi:10.1364/AO.386863 (2020);
[13] Chen, C. et al. Spectral tomographic imaging with aplanatic metalens. Light: Science & Applications 8, 99, doi:10.1038/s41377-019-0208-0 (2019);
[14] Lin, P. C., Sun, P.-C., Zhu, L. & Fainman, Y. Single-shot depth-section imaging through chromatic slit-scan confocal microscopy. Appl. Opt. 37, 6764-6770, doi:10.1364/AO.37.006764 (1998);
[15] Dobson, S. L., Sun, P.-c. & Fainman, Y. Diffractive lenses for chromatic confocal imaging. Appl. Opt. 36, 4744-4748, doi:10.1364/AO.36.004744 (1997);
[16] Lyda, W., Gronle, M., Fleischle, D., Mauch, F. & Osten, W. Advantages of chromatic-confocal spectral interferometry in comparison to chromatic confocal microscopy. Measurement Science and Technology 23, 054009, doi:10.1088/0957-0233/23/5/054009 (2012);
[17] Chun, B. S., Kim, K. & Gweon, D. Three-dimensional surface profile measurement using a beam scanning chromatic confocal microscope. Review of Scientific Instruments 80, 073706, doi:10.1063/1.3184023 (2009);
[18] Kim, T., Kim, S. H., Do, D., Yoo, H. & Gweon, D. Chromatic confocal microscopy with a novel wavelength detection method using transmittance. Optics express 21, 6286-6294, doi:10.1364/OE.21.006286 (2013);
[19] R, J. G., Meneses, J., Tribillon, G., Gharbi, T. & Plata, A. Chromatic confocal microscopy by means of continuum light generated through a standard single-mode fibre. Journal of Optics A: Pure and Applied Optics 6, 544-548, doi:10.1088/1464-4258/6/6/008 (2004);
[20] Garzón, J., Gharbi, T. & Meneses, J. Real time determination of the optical thickness and topography of tissues by chromatic confocal microscopy. Journal of Optics A: Pure and Applied Optics 10, 104028, doi:10.1088/1464-4258/10/10/104028 (2008);
[21] Luo, D., Kuang, C. & Liu, X. Fiber-based chromatic confocal microscope with Gaussian fitting method. Optics & Laser Technology 44, 788-793, doi:https://doi.org/10.1016/j.optlastec.2011.10.027 (2012);
[22] Traegardh, J. et al. A simple but precise method for quantitative measurement of the quality of the laser focus in a scanning optical microscope. Journal of Microscopy 259, 66-73, doi:https://doi.org/10.1111/jmi.12249 (2015); and
[23] Václavík, J. & Vapenka, D. Gallium Phosphide as a material for visible and infrared optics. EPJ Web of Conferences 48 (2013).

It is generally known that the visualization of the cellular and subcellular structures within biological tissue improves understanding and identifying the very nature of these entities. In many cases, cellular level, three-dimensional imaging is required, e.g. for early disease diagnosis. Basically three-dimensional imaging can be obtained by tomographic techniques, like ultrasound imaging, magnetic resonance imaging, computer tomography, optical coherence tomography, confocal microscopy [1], and chromatic confocal microscopy [2]. Ultrasound is one of the most commonly used diagnostic technique in biomedical imaging, and it has an axial resolution of around 100s of µm, and a lateral resolution of submillimeter scales. Magnetic resonance tomography is applied in the medical field as well, wherein the field of view of the magnetic resonance tomography is a couple of centimeters and axial resolution is a couple of millimeters. Medical imaging with X-ray computed tomography has a lateral resolution of about 50 microns and axial resolution of around 1 mm. Thus, despite of extensive use in the clinic for tomographic purposes, these imaging techniques suffer from low resolution and therefore have not been a candidate for cellular and subcellular level studies. Optical coherence tomography (OCT) provides three-dimensional information of a sample based on low-coherence interferometry of light with axial and lateral resolution of a few µm. Even though OCT can achieve cellular level lateral resolution, it is maintained in the focal plane only, and as one moves above or below the focus, the resolution drops significantly.

Confocal microscopy has been the technique of choice for cellular and subcellular tomography with lateral resolution better than 1 µm ([3] to [6]). Standard confocal microscopy is a point scanning method, and one would need to scan X, Y, and Z-axis to acquire the complete tomographic information, which decreases the scanning time significantly [7]. Spinning disc confocal microscopy [6] has increased the scanning speed to a level such that up to 1000 frames can be acquired in less than a second. However, such systems are still very bulky and only used as benchtop imaging systems. Depth imaging can be obtained with standard confocal microscopy by scanning in Z direction only.

This limitation is met by chromatic confocal microscopy ([2], [8] to [20]) which uses the chromatic dispersion property of light, allowing to extend the imaging range (range of imaging in depth direction) with a comparable lateral resolution of that of confocal microscopy. Chromatic confocal microscopy has been achieved using chromatic dispersion of refractive and diffractive optical elements and specially fabricated metalenses [13].

A maximum imaging range of 250 µm has been achieved with conventional chromatic confocal microscopy, using chromatic aberration of multiple achromatic and diffractive lenses where an average lateral resolution of around 1 µm is maintained within the imaging range [20]. This imaging range is insufficient for plural applications, wherein in particular in biological and medical imaging, there is an interest in increasing the imaging range.

Generally, the resolution in confocal microscopy can be improved by using a high numerical aperture (NA) lens but this comes at the expense of a reduced imaging range. A higher imaging range can be achieved by using a lower NA objective, but then the lateral resolution is compromised. Therefore, current advancements in this direction suffer from the trade-off between the imaging range and the resolution. For surface profiling, which is one of the main applications of the chromatic confocal microscopy ([10], [17], [21]), multi-lens commercial systems are available with an imaging range of the order of few centimeters, but with poor lateral resolution.

Thus, there is still a need for a tomographic technique that has a superior lateral and axial resolution, like in confocal microscopy, and a large imaging range, like in chromatic confocal microscopy, in particular to visualize cellular and subcellular structures in biological samples.

### Objective of the invention

The objective of the invention is to provide an improved confocal microscopy apparatus and an improved confocal microscopy method for imaging a sample by chromatic confocal microscopy, wherein disadvantages of conventional techniques are avoided. In particular, chromatic confocal microscopy is to be enabled with improved lateral and/or axial resolution, in particular with sub-µm resolution, as it is known from conventional confocal microscopy, but with an increased imaging range, in particular from some 100 µm to few centimeters.

### Brief summary of the invention

These objectives are correspondingly solved by a confocal microscopy apparatus and a confocal microscopy method comprising the features of the independent claims, respectively. Preferred embodiments and applications of the invention arise from the dependent claims.

According to first general aspect of the invention, the above objective is solved by a confocal microscopy apparatus (in particular chromatic confocal microscope), being configured for imaging a sample under investigation by chromatic confocal microscopy. The confocal microscopy apparatus comprises an illumination source device being arranged for creating illumination light having an illumination spectrum covering a plurality of illumination wavelengths, a focusing device including at least one focusing lens being configured for focusing the illumination light along an imaging axis into a plurality of wavelength-dependent focal planes in an axial imaging range of a sample to be investigated, wherein the at least one focusing lens is further arranged for collecting scattering light created in the focal planes of the sample, and a detector device being arranged for spectrally resolved detecting of the scattering light. According to the invention, the at least one focusing lens is made of a dispersive focusing lens material with an Abbe number below 10. The dispersive focusing lens material is the material of the at least one focusing lens, wherein this material is at least partially transparent, transparency e. g. at least 50 % in the wavelength range of interest.

According to second general aspect of the invention, the above objective is solved by a confocal microscopy method for imaging a sample to be investigated by chromatic confocal microscopy, comprising the steps of creating illumination light having an illumination spectrum covering a plurality of illumination wavelengths, focusing the illumination light with at least one focusing lens along an imaging axis into a plurality of wavelength-dependent focal planes in an axial imaging range of the sample, collecting scattering light with the at least one focusing lens, wherein the scattering light is created in the focal planes of the sample, and spectrally resolved detecting of the scattering light. According to the invention, the at least one focusing lens is made of a dispersive focusing lens material with an Abbe number below 10. Preferably, the confocal microscopy method or an embodiment thereof is executed using the confocal microscopy apparatus according to the first general aspect of the invention or an embodiment thereof.

Advantageously, the inventors have found that the imaging range in depth direction, i. e. along the imaging axis, can be substantially increased by employing a material with low Abbe number for providing the at least one focusing lens. The at least one focusing lens being made of a material with the Abbe number below 10 allows to focus each of different wavelength components of a light source, e. g. a supercontinuum light source, at a different axial position in an extended imaging range. The term "Abbe number" refers to a dimensionless quantity characterizing the optical dispersive properties of optical materials, in particular characterizing how much the refractive index changes with the wavelength of light. For example, the Abbe number can be defined with (nₑ - 1)/(n_{F'} - n_{C'}) by referring to the refractive index of the lens material at spectral Fraunhofer lines e (λ = 546,074 nm), F'(λ = 479,9914 nm) and C' (λ = 643,8469 nm).

Furthermore, the inventors have found that materials with an Abbe number below 10, in particular 8 or lower, e. g. down to 5 or even 4 are available, which are sufficiently transmissive in the visible to NIR spectral range and which are suitable for creating the at least one focusing lens for confocal microscopy. Employing a focusing lens made of a material with the Abbe number below 10 is in contrast to employing conventional lenses based on materials such as fused silica and quartz for the visible-NIR range, which have an excellent optical quality and high transmission of about 90%, but a high an Abbe number of around 50. Materials with low Abbe number are rarely used for the visible or IR wavelengths because of the low transmission thereof, which is around 50% for the 550 nm and 60% for the 600 nm and above. However, the inventors have found that despite of the low transmission in the visible and NIR range, materials with low Abbe number, like e. g. ZnSe, are suitable for chromatic confocal tomography because of their high chromatic dispersion. The inventors have utilized the chromatic dispersion property of e. g. a single ZnSe lens (50.8 mm focal length) to realize a confocal microscopy apparatus with an imaging range of 1.8 cm with an average lateral resolution of e. g. 2.46 µm where the imaging points are equally spaced in distance along the imaging axis.

The confocal microscopy apparatus design not only allows to use the commercially available or specially manufactured lenses with low Abbe number, but also the fact that only a single lens can be employed for 3D imaging, making the system very attractive for all, in particular commercial and/or scientific, e.g. biological applications.

According to a preferred embodiment of the invention, the illumination spectrum of the illumination source device and the focusing lens material of the at least one focusing lens are selected such that the imaging range including the focal planes is at least 10 µm and/or at most 10 cm. For example, the inventive chromatic confocal microscopy apparatus has an imaging range of e. g. up to 1.8 cm or even more, while keeping an average lateral resolution of e. g. down to 2.46 µm or even less.

According to further preferred embodiment of the invention, the at least one focusing lens is made of zinc selenide (ZnSe). Advantageously, the inventors have found, that this material has an exceptionally high chromatic dispersion property, with an Abbe number of 8 and simultaneously excellent optical properties. As a further advantage, ZnSe lenses are commercially available. The invention is not restricted to this material, but other materials with the Abbe number below 10 can be employed. For example, according to another advantageous embodiment, the at least one focusing lens is made of gallium phosphide (GaP), that has an Abbe number of 6. Up to now, GaP has not been used for commercial lens fabrication due to the release of dangerous substances during the fabrication process [23].

Advantageously, plural options for designing the optics for focusing the illumination light and for collecting the scattering light are available. According to a preferred variant, the at least one focusing lens comprises one single lens. Employing the single lens, having the Abbe number below 10, has advantages in terms of low costs and simple adjustment of the focusing lens. Alternatively, multiple focusing lenses can be employed wherein one or more of them is made of the material having the Abbe number below 10. Optics made of multiple focusing lenses may have advantages in terms of improving the imaging quality.

According to a further embodiment of the invention, the at least one focusing lens has an aspheric surface. The aspheric surface allows shaping the light field of the illumination light in an advantageous manner. In general, the aspheric lenses are corrected for the spherical aberrations but only for a certain wavelength. With moving away from the spherically corrected wavelength, the aberrations can increase and reduce the image quality. As an example, a ZnSe lens can be designed for 10 µm wavelength and therefore spherically corrected for wavelengths around this wavelength only. If this lens is used for focusing a collimated NIR/IR beam of light, the spherical aberrations could deteriorate the focal spot for particular applications. For avoiding this, a diverging beam can be used, emitted e. g. from an output of the illumination source device or an optional light splitting device as described below. The divergence of the beam directed to the focusing device preferably can be set by the optical configuration of the inventive confocal microscopy apparatus such that the spherical aberration for the visible-NIR wavelengths are minimized or even suppressed. Depending on the NA of the illumination source device or in particular the light splitting device, the distance between the emission output thereof and the focussing lens can be adjusted to minimize the spherical aberrations for a certain wavelength. This methodology can be used to design the inventive system, and the distance between the emission output and the front surface of the focussing lens can be adjusted to minimize the spherical aberrations for a predetermined wavelength, e. g. 700 nm. In this case, the spherical aberrations for the rest of the spectrum are not fully compensated but it is still possible to achieve an average lateral resolution of e. g. 0.87 µm and 2.46 µm for 6.35 mm and 50.8 mm focal length focussing lenses, respectively.

Another advantage of the invention results from the broad spectral range available for the confocal imaging. Thus, according to another preferred embodiment of the invention, the illumination spectrum of the illumination source extends from the visible to NIR wavelength range, i. e. the illumination spectrum covers this whole spectral range or at least one variable spectral interval therein. Preferably, the illumination spectrum of the illumination light covers a wavelength range from 400 nm, in particular from 400 nm, to 1 µm, in particular to 1 µm, or a wavelength interval within this wavelength range covering a frequency range of at least 1 * 10⁻⁶ cm⁻¹.

Particularly preferred, the illumination source comprises a supercontinuum laser source or a swept source laser or an incoherent white light source. Advantageously, these types of light sources facilitate the creation of the above broad spectral ranges.

Preferably, the detector device includes a diffractive element being arranged for spectrally separating the scattering light. The diffractive element may comprise e. g. at least one prism and/or at least one grating. Advantageously, the diffractive element facilitates the simultaneous detection of all spectral components of the collected scattering light with spectral resolution.

According to a further advantageous embodiment of the invention, a light splitting device is arranged for relaying the illumination light from the illumination source device to the focusing device and for relaying the scattering light from the focusing device to the detector device. Particularly preferred, the light splitting device comprises e. g. at least one fiber coupler and/or at least one beam splitter element. The light splitting device has particular advantages in terms of a compact configuration of the confocal microscopy apparatus.

Advantageously, plural applications of the invention are available, e. g. in imaging of biological, commercial or medical samples. Accordingly, the sample preferably comprises a biological sample, like a biological cell, a group of biological cells, e. g. a tissue, or a component of a biological cell. Alternatively, for imaging applications in non-biological fields, the sample may comprise e. g. a workpiece, in particular a workpiece to be investigated by surface profiling.

Features disclosed in the context of the confocal microscopy apparatus and the embodiments thereof also represent preferred features of the inventive confocal microscopy method and the embodiments thereof, and vice versa. The aforementioned aspects and inventive and preferred features, in particular with regard to the configuration of the confocal microscopy apparatus as well as the dimensions and compositions of individual components which have been described in relation to the confocal microscopy apparatus, therefore also apply for the method. The preferred embodiments, variants and features of the invention described above are combinable with one another as desired.

### Brief description of the drawings

Further details and advantages of the invention are described in the following with reference to the attached drawings, which show in:
- Figure 1:: a schematic illustration of a confocal microscopy apparatus according to a preferred embodiment of the invention;
- Figures 2 and 3:: experimental and numerical results characterizing embodiments of a ZnSe lens based confocal microscopy apparatus;
- Figure 4:: experimental results of volumetric imaging of iron oxide nanoparticles; and
- Figures 5 and 6:: experimental results of height profiling measurements.

### Preferred embodiments of the invention

Features of preferred embodiments of the invention are described in the following with reference to a ZnSe lens based confocal microscopy apparatus. It is emphasized that the invention is not restricted to employing ZnSe as the material of the at least one focusing lens. Other materials being transparent within the spectral range of interest, in particular in the spectral range of the illumination light emitted by the illumination source device, and having an Abbe number below 10 can be employed as well. Based on the considerations outlined below, optical parameters of the at least one focusing lens can be selected in dependency on the resolution and imaging range to be obtained. Details of chromatic confocal microscopy, in particular details of the system components, like casings or a microscope corpus, and controlling thereof, details of scanning techniques and details of detector data processing, are not described as they are known per se from conventional chromatic confocal microscopy. Similar to conventional point scanning confocal microscopes, the inventive confocal microscopy apparatus can be limited in terms of image acquisition speed which can be improved further by using a fast scanner and camera combination (not described in detail).

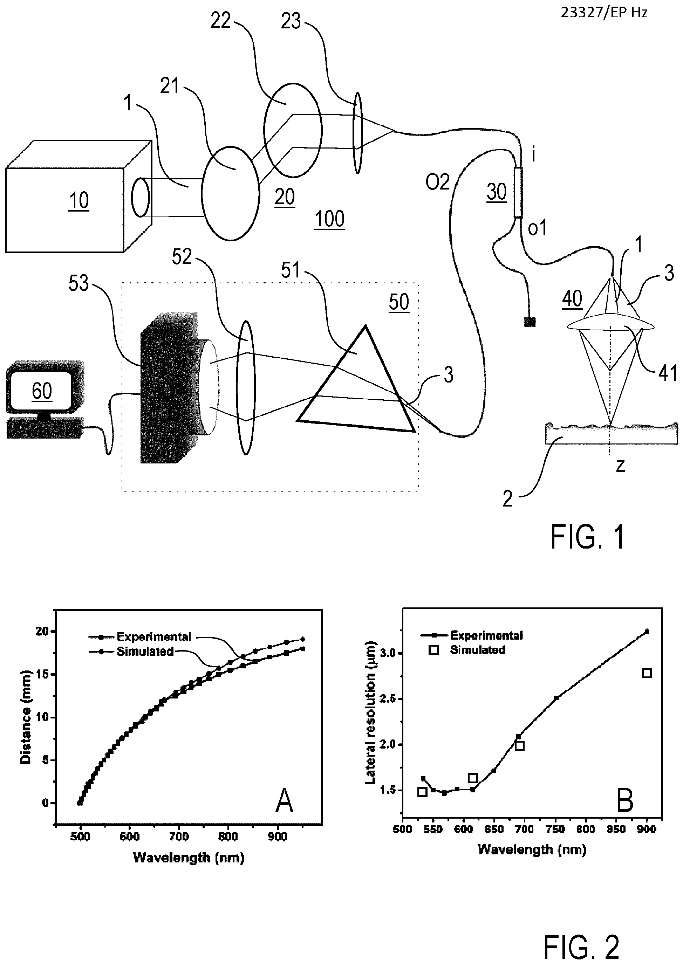

As schematically shown in Figure 1, an embodiment of the inventive confocal microscopy apparatus 100 comprises an illumination source device 10, a beam relaying section 20, a light splitting device 30, a focusing device 40, a detector device 50 and a control device 60, like a control computer.

The illumination source device 10 creates broadband illumination light 1 with an illumination spectrum covering a plurality of illumination wavelengths. As an example, the illumination source device 10 comprises a supercontinuum laser source (SCL), like SC-Pro (manufacturer YSL Photonics, China). The illumination light 1 covers a spectrum of e. g. 400 nm to 2400 nm.

The beam relaying section 20 comprises mirrors 21, 22 and an incoupling lens 23. The illumination light 1 from the illumination source device 10 is steered through the mirrors 21 and 22. Mirror 21 is a dichroic mirror (e. g. DMPL950T, Thorlabs Inc., USA), which reflects wavelengths up to e. g. 950 nm only. The higher wavelengths are transmitted through the mirror 21 and are blocked using a beam block (not shown).

The illumination light 1 reflected by mirror 22 is coupled with the incoupling lens 23 in an optical fibre providing an input arm (i) of an optical coupler 31, like a 75/25 single-mode optical coupler (e. g., TW670R3A2, Thorlabs, USA), of the light splitting device 30. The diverging light at the optical fibre of the first output arm (o1) of the optical coupler 31 is focused using the focusing lens 41 of the focusing device 40 at the position of the sample 2. The focusing lens 41 is a ZnSe lens, having an Abbe number of 8 (e.g. 39469, Edmund Optics, UK). The focusing lens 41 may comprise an aspheric lens being corrected for spherical aberrations. The sample 2 is e. g. a biological sample or a workpiece, e. g. to be investigated by height profiling (surface profiling, examples see below).

The focusing lens 41 is designed for focusing the illumination light 1 along the imaging axis z into a plurality of wavelength-dependent focal planes in an axial imaging range of the sample 2 and for collecting scattering light created in the focal planes of the sample. The scattering light 3 from the sample 2 is coupled back to the first output arm (o1) of the optical coupler 31 and directed via the second output arm (o2) to the detector device 50, which is coupled with the control device 60.

The detector device 50 is a spectrometer comprising a diffractive element 51 for spectrally separating the scattering light 3. As an example, the diffractive element 51 comprises at least one prism (e. g. PS855, Thorlabs Inc., USA). Alternatively, the diffractive element 51 comprises at least one grating. The prism is preferred because it provides higher transmission efficiency over a broad spectrum. Furthermore, the detector device 50 comprises an imaging lens 52 and a camera device 52. The imaging lens 52 is an objective lens (e. g. AF Nikkor 85 mm, Nikon, Japan) which focusses the spectrally separated scattering light 3 onto the camera device 52. The camera device 52 comprises e. g. a linear CCD camera (like raL2048, Basler AG, Germany) working at e. g. 55 kHz line rate. With the camera device 52, e. g. a line image of the spectrally separated scattering light 3 representing the scattering in dependency on the sample depth in Z direction is obtained. By scanning the illumination light 1 relative to the sample 2 in lateral X and/or Y directions perpendicular to the Z direction, a 2D or full 3D image can be collected. The image data from the camera device 52 are received by the control device 60, where the confocal sample image is reconstructed from the image data.

Additionally, the control device 60 can be employed for controlling components of the confocal microscopy apparatus 100, like the illumination source device 10 and/or the focussing device 40 and/or the scanning operation, in order to adapt the imaging conditions, in particular the imaging range in Z direction in dependency on the particular imaging task. As an example, at least one control loop can be provided for setting the illumination source device 10 and/or the focussing device 40 and/or the scanning operation in dependency on image features for improving the image quality.

For practical applications, the confocal microscopy apparatus 100 is designed in consideration of the following aspects. First, the numerical aperture of the system should be as high as possible to achieve the best possible resolution. Secondly, the axial focal separation among different wavelength components should be increased significantly to achieve a maximum possible imaging range. However, as mentioned above, there is a trade-off between the imaging range and the spatial resolution. The resolution can be improved using a high numerical aperture objective, but this, in turn, reduces the imaging range and vice versa. This relation can be quantified by a parameter, extended depth resolution ratio (EDRR), which is the ratio of the imaging range and average lateral resolution in that region. The higher the EDRR, the better the optical device's capability to image for a longer depth with good resolution.

The inventors numerically simulated the design of the confocal microscopy apparatus 100 using OpticStudio software (Zemax LLC, UK) to optimize the aforementioned parameters and in particular the EDRR. To be able to achieve maximum axial separation between different wavelength components, the chromatic dispersion property of the material of the focussing lens 41 is utilized. The chromatic dispersion of the material is estimated by the Abbe number; the lower the Abbe number, the higher is the chromatic dispersion of the material. ZnSe has an Abbe number of 8 (referring in particular to the visible wavelength range) and is one of the smallest Abbe number materials whose lenses are commercially available. It has a transmission of more than 50% for the wavelength range of 0.55 µm to 15 µm.

Using the OpticStudio software, the inventors simulated the performance of three commercially available ZnSe lenses having a focal length of 6.35 mm (39469, Edmund Optics, UK), 12.7 mm (39471, Edmund Optics, UK), and 50.8 mm (39495, Edmund Optics, UK) at 10 µm wavelength. All of these lenses are designed to focus a collimated beam and corrected for the spherical aberration at 10 µm wavelength. However, these lenses also can be used in the visible and NIR wavelength range which is feasible because of the reasonable transmission at these wavelengths.

If the focussing lens 41 introduces significant spherical aberrations so that the lateral resolution is degraded, a diverging beam (instead of a collimated beam) from the optical fibre tip of the first output arm (o1) of the optical coupler 31 is provided and focused using the focussing lens 41, e. g. the ZnSe lens. For the diverging beam, with a certain numerical aperture, at a certain wavelength, there is a fixed distance of the focussing lens 41 from the fiber tip for which the aspherical aberrations are minimum at the focal position. Using numerical simulations, the inventors calculated the distance between the lens and the fiber tip for which the 700 nm wavelength has the minimum spherical aberrations. For this fixed distance between the lens and the fiber tip, parameters for the other wavelengths of the spectrum, i.e. 500 nm and 950 nm were simulated. For all the simulations, the fiber NA of 0.14 was considered. For 500 nm, 700 nm, and 950 nm wavelengths, the imaging range, which is the distance between the focal positions of the 500 nm and the 950 nm wavelength, full-width-half-maxima (FWHM) of the lateral resolution, the Strehl ratio (SR, or: Strehl number, ratio of an observed maximum intensity of a point source in the image plane to the theoretical maximum intensity of a perfect, diffraction-limited optical system), and the EDRR were calculated, as summarized in the table.

| Lens | Wavelength | Strehl Ratio | Focal position (mm) | Lateral Resolution (µm) | EDRR |
|---|---|---|---|---|---|
| 39469 (6.35 mm focal length) | 500 nm | 0.16 | 5.5 | 0.7 | |
| | 700 nm | 0.99 | 6.57 | 1.08 | |
| | 950 nm | 0.86 | 7.07 | 1.57 | |
| | | | Imaging Range (1.57 mm) | Avg (1.11) | 1414 |
| 39471 (12.7 mm focal length) | 500 nm | 0.1 | 12.4 | 0.8 | |
| | 700 nm | 0.94 | 14.9 | 1.4 | |
| | 950 nm | 0.81 | 15.8 | 2.1 | |
| | | | Imaging Range (3.4 mm) | Avg (1.43) | 2377 |
| 39495 (50.8 mm focal length) | 500 nm | 0.4 | 64.4 | 1.5 | |
| | 700 nm | 1 | 78.2 | 2.75 | |
| | 950 nm | 0.85 | 83.78 | 3.2 | |
| | | | Imaging Range (19.38 mm) | Avg (2.48) | 7814 |

The above table shows the substantially increased imaging range obtained with the invention while the spatial resolution is kept as high as with the standard confocal microscopy. In particular, it is evident from the simulations that the lateral resolution, ranging between 0.7 µm to 1.57 µm for 500 nm to 950 nm wavelengths, can be achieved by using a 6.35 mm focal length lens with an imaging range of 1.57 mm. The EDRR for this lens comes out to be 1414. The imaging range can be increased to 3.4 mm by using a 12.7 mm focal length lens, and can be increased further up to 19.38 mm by using a 50.8 mm focal length lens, with an EDRR of 2377 and 7814 respectively.

With practical tests, the confocal microscopy apparatus 100 was calibrated for its performance by measuring parameters like imaging range, lateral, and axial resolution. The lateral resolution of the confocal microscopy apparatus 100 can be characterized e. g. by imaging a resolution target (R1L3S6P, Thorlabs Inc., USA) and calculating a focal spot size of the confocal microscopy apparatus 100 using the knife-edge technique [22]. The knife-edge measurement was performed by traversing the resolution target with 50 nm steps using an automated translation stage. The inventors also calibrated the imaging range of the system by placing a mirror at the sample position and moving it axially using a precision translation stage (MBT616D/M Thorlabs Inc., USA), and measuring the peak position of the reflected signal from the mirror, in the spectrometer as a function of the stage position. To measure the axial resolution, the axial point spread function is measured at different depths. To demonstrate the 3D imaging capabilities of the confocal microscopy apparatus 100 with high lateral resolution over the imaging range, volumetric imaging of a nanoparticle phantom (OCTPHANTOMS.ORG, UK) with particle size < 1 µm was performed. Further, the inventors measured the point spread function of the nanoparticles at different depths.

The potential of the confocal microscopy apparatus 100 for imaging biological samples was demonstrated by imaging cellular features in an onion sample in 3D. Confocal images of the onion tissue were collected, including an enface image of the epidermal layer of onion tissue and onion tissue images at the depth of 30 µm to 220 µm, allowing a 3D reconstruction of the tissue volume of the onion tissue. Furthermore, since the chromatic confocal microscopy has been extensively used in industry for the height profiling [8] of samples, the feasibility of the inventive confocal microscopy apparatus 100 was also tested for the same. To this end, the inventors measured the height measurement accuracy of the confocal microscopy apparatus 100 by placing a mirror (at the position of sample 2) on a piezo-electric stage and measured the movement of the piezo stage at different driving voltages. The efficacy of the height profiling of the confocal microscopy apparatus 100 was practically demonstrated by measuring the height of microfluidic channels on a chip.

Figure 2 illustrates advantageous results obtained with the 50.8 mm focal length, ZnSe lens based confocal microscopy apparatus 100. Figure 2A shows the experimental and the simulated graph plotted between the focal distance and wavelength, and Figure 2B shows the experimental and the simulated lateral resolution as a function of wavelength. With more details, the axial focal position of different wavelength components over the wavelength range is shown in Figure 2A. An imaging range of 18 mm is achieved for the wavelength components from 500 nm to 950 nm which is in close agreement with the simulations. According to Figure 2B showing the experimental and simulated lateral resolution across the entire imaging range, an average lateral resolution of 2.46 µm is obtained with the inventive system.

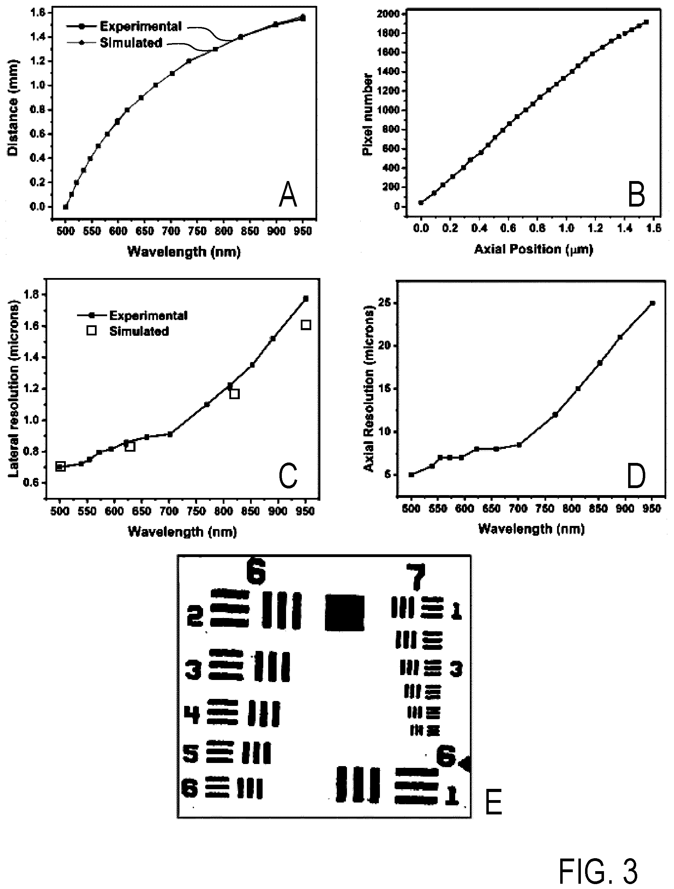

The characterization of a 6.35 mm ZnSe lens based confocal microscopy apparatus 100 is illustrated in Figure 3. As shown in Figure 3A with the nearly identical experimental and simulated graphs plotted between the wavelength and their corresponding focal distance, the wavelengths from 500 nm to 950 nm are axially separated over a distance of 1.55 mm. According to Figure 3B, the peak position of the reflected signal from a mirror at different distances is shown as a function of camera pixel numbers. The lateral resolution for the 6.35 mm ZnSe lens based confocal microscopy apparatus 100 was measured experimentally using the knife-edge technique cited above. The theoretical and experimental lateral resolutions are plotted in Figure 3C. The best lateral resolution was measured to be 0.7 µm at 500 nm wavelength and was kept below 1 µm up to 735 nm which corresponds to a depth of approximately 1.2 mm. For 950 nm wavelength, the lateral resolution increased to 1.77 µm. The experimental lateral resolution is comparable to the theoretical values obtained from the simulations. The inventors also measured the axial resolution which determines the optical sectioning capability of the confocal microscopy apparatus 100. The measured axial resolution as a function of wavelength is shown in Figure 3D. Within the wavelength range of 500 nm to 950 nm, the axial resolution varies from 5 µm to 25 µm. Further, the inventors imaged the USAF resolution target (R1S1L1N, Thorlabs Inc., USA) at 950 nm wavelength, and could identify all the six elements of group seven as shown in Figure 3E. This corresponds to a lateral resolution better than 2 µm which was maintained for the whole imaging range.

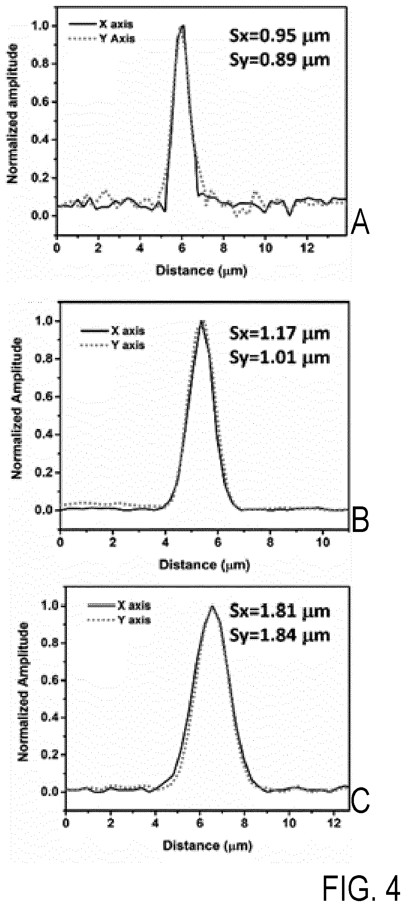

To demonstrate the high-resolution depth imaging capability of the inventive confocal microscopy apparatus 100, the inventors performed volumetric imaging of an iron oxide nanoparticles phantom with particle size <1 µm. The phantom (not shown) was imaged for a 0.5 mm x 0.5 mm area with a depth of around 1.5 mm (limited by the depth range of the system). Enface images of iron oxide nanoparticles at three depths 0.35 mm, 0.9 mm, and 1.5 mm were obtained. The corresponding X and Y intensity profiles of the visibly smallest gold nanoparticle are plotted in Figures 4A, 4B and 4C, respectively. At a depth of 0.35 mm, the size of the gold nanoparticle is measured to be better than 1 µm in X-axis and Y-axis. The size of the smallest nanoparticle at a depth of 0.9 mm was also measured to be of the order of 1 µm. The measured size of the nanoparticle increased to about 1.8 µm at a depth of 1.5 mm.

An important application of the confocal microscopy apparatus 100 is in the field of surface profiling, wherein the sample 2 is a workpiece surface to be investigated. Several of such devices are commercially available where chromatic aberrations of standard lenses are used for the axial separation of the spectral components. The reflected light from the sample is acquired in the confocal configuration and the peak of the reflected spectrum is used to measure the height profile of the sample. As an example, one of the commercially available systems (IFS2407-0,1, from Micro-Epsilon) which has a spatial resolution of 3 microns (comparable to the inventive system), provides an imaging range of only 100 microns. On the contrary, using the 50.8 mm focal length ZnSe focussing lens, the inventive confocal microscopy apparatus achieves an imaging range of 1.8 cm, which is 180 times greater than the commercially available device.

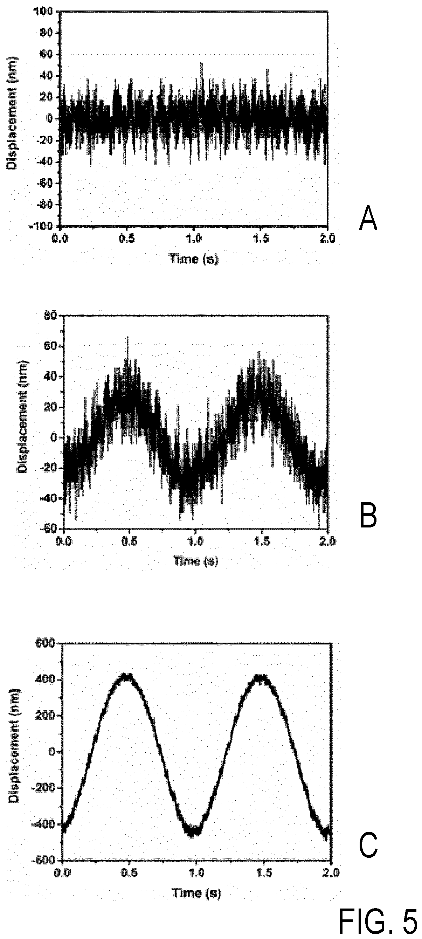

For surface profiling, the inventors measured a minimum height change that one can measure using the confocal microscopy apparatus 100. A mirror was placed at the focal position of 700 nm wavelength, and the peak position of the reflected signal was monitored which is shown in Figure 5A. The standard deviation of the peak position is measured to be 14 nm, making the system capable of surface profiling with an accuracy of 14 nm. Further, the inventors introduced a controlled displacement in the mirror placed at the sample position using a piezo-electric stage. The displacement measured by the system when the piezo stage was driven with a sinusoidal voltage for about 50 nm and about 900 nm displacement is shown in Figures 5B and 5C, respectively, proving the high precision of the height profiling capability of the invention.

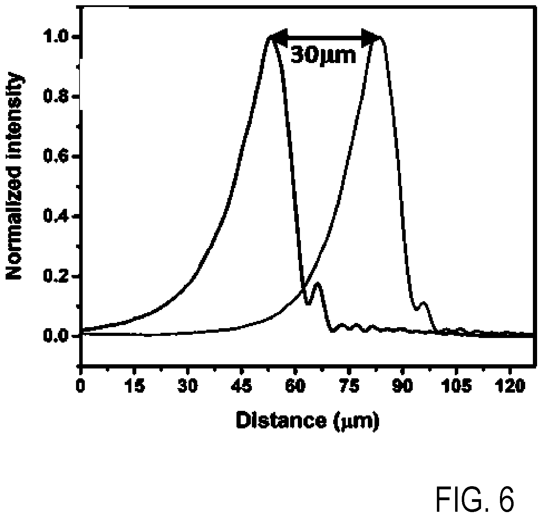

Figure 6 illustrates another height profile measurement with a volumetric 3D reconstruction of a microfluidic channel chip (not shown), wherein an intensity profile of two layers as a function of distance is shown. The microfluidic channel was designed with a channel of varying width but of a constant height of 30 microns. The intensity profile matches very well with the designed dimension of the microfluidic channel having a 30 µm distance of the investigated layers. The height measurement accuracy can be improved further by averaging the measurements but it comes at the expense of acquisition time.

The features of the invention disclosed in the above description, the drawings and the claims can be of significance individually, in combination or sub-combination for the implementation of the invention in its different embodiments.

## Claims

1. Confocal microscopy apparatus (100), being configured for imaging a sample (2) under investigation by chromatic confocal microscopy, comprising
- an illumination source device (10) being arranged for creating illumination light (1) having an illumination spectrum covering a plurality of illumination wavelengths,
- a focusing device (40) including at least one focusing lens (41) being configured for focusing the illumination light (1) along an imaging axis (z) into a plurality of wavelength-dependent focal planes in an axial imaging range of a sample (2) to be investigated, wherein the at least one focusing lens (41) is further arranged for collecting scattering light (3) created in the focal planes of the sample (2), and
- a detector device (50) being arranged for spectrally resolved detecting of the scattering light (3),
**characterized in that**
- the at least one focusing lens (41) is made of a dispersive focusing lens (41) material with an Abbe number below 10.

2. Confocal microscopy apparatus according to claim 1, wherein
- the illumination spectrum of the illumination source device (10) and the focusing lens (41) material of the at least one focusing lens (41) are selected such that the imaging range including the focal planes is at least 10 µm.

3. Confocal microscopy apparatus according to one of the foregoing claims, wherein
- the at least one focusing lens (41) is made of ZnSe or GaP.

4. Confocal microscopy apparatus according to one of the foregoing claims, wherein
- the at least one focusing lens (41) comprises a single lens, and/or
- the at least one focusing lens (41) has an aspheric surface.

5. Confocal microscopy apparatus according to one of the foregoing claims, wherein
- the illumination spectrum of the illumination source device (10) extends from the visible to NIR wavelength range.

6. Confocal microscopy apparatus according to one of the foregoing claims, wherein
- the illumination source device (10) comprises a supercontinuum laser source or an incoherent white light source.

7. Confocal microscopy apparatus according to one of the foregoing claims, wherein
- the detector device (50) includes a diffractive element (51) being arranged for spectrally separating the scattering light (3).

8. Confocal microscopy apparatus according to one of the foregoing claims, further comprising
- a light splitting device (30) being arranged for relaying the illumination light (1) from the illumination source device (10) to the focusing device (40) and for relaying the scattering light (3) from the focusing device (40) to the detector device (50).

9. Confocal microscopy method for imaging a sample (2) to be investigated by chromatic confocal microscopy, comprising the steps of
- creating illumination light (1) having an illumination spectrum covering a plurality of illumination wavelengths,
- focusing the illumination light (1) with at least one focusing lens (41) along an imaging axis into a plurality of wavelength-dependent focal planes in an axial imaging range of the sample (2),
- collecting scattering light (3) with the at least one focusing lens (41), wherein the scattering light (3) is created in the focal planes of the sample (2), and
- spectrally resolved detecting of the scattering light (3),
**characterized in that**
- the at least one focusing lens (41) is made of a dispersive focusing lens (41) material with an Abbe number below 10.

10. Confocal microscopy method according to claim 9, wherein
- the illumination spectrum of the illumination source device (10) and the focusing lens (41) material of the at least one focusing lens (41) are selected such that the imaging range including the focal planes is at least 10 µm.

11. Confocal microscopy method according to one of the claims 9 to 10, wherein
- the at least one focusing lens (41) is made of ZnSe or GaP.

12. Confocal microscopy method according to one of the claims 9 to 11, wherein
- the illumination spectrum of the illumination source device (10) extends from the visible to NIR wavelength range.

13. Confocal microscopy method according to one of the claims 9 to 12, wherein
- the illumination light (1) is created with a supercontinuum laser source or an incoherent white light source.

14. Confocal microscopy method according to one of the claims 9 to 13, including the steps of
- relaying the illumination light (1) with a light splitting device (30) from the illumination source device (10) to the focusing device (40) and
- relaying the scattering light (3) with the light splitting device (30) from the focusing device (40) to the detector device (50).

15. Confocal microscopy method according to one of the claims 9 to 14, wherein
- the sample (2) comprises a biological sample (2) or a workpiece, in particular for surface profiling.
